Europäisches Patentamt

European Patent Office

Office européen des brevets

(19)

(11) Veröffentlichungsnummer: **0 049 864**

**A1**

(12) **EUROPÄISCHE PATENTANMELDUNG**

(21) Anmeldenummer: **81108028.2**

(22) Anmeldetag: **07.10.81**

(51) Int. Cl.³: **B 62 D 25/18**

(30) Priorität: **09.10.80 DE 3038113**

(43) Veröffentlichungstag der Anmeldung:
**21.04.82 Patentblatt 82/16**

(84) Benannte Vertragsstaaten:
**AT BE CH DE FR GB IT LI LU NL SE**

(71) Anmelder: **Arenhold, Knut**
**Westend 7**
**D-2000 Hamburg 52(DE)**

(72) Erfinder: **Arenhold, Knut**
**Westend 7**
**D-2000 Hamburg 52(DE)**

(74) Vertreter: **UEXKÜLL & STOLBERG Patentanwälte**
**Beselerstrasse 4**
**D-2000 Hamburg 52(DE)**

(54) **Universal-Schmutzfänger für Kraftfahrzeuge.**

(57) Schmutzfänger zur direkten Befestigung am Kotflügel-falz eines Kraftfahrzeuges mit einem flexiblen Schmutzfän-gerlappen, der einen Lappenhauptkörper (2) und einen sich von diesem nach oben erstreckenden Anpassungsansatz (3) aufweist. Zumindest im Bereich der Innenkante (6) des Anpassungsansatzes (3) ist ein als Verstärkungsstück die-nender, ebener, verbiegbarer Blechstreifen (4) vorgesehen, in dem sich eine im wesentlichen parallel zur Innenkante (6) des Anpassungsansatzes (3) verlaufende Vertiefung (8) und/oder Rippe befindet. Durch die Vertiefung (8) oder Rippe können an den Enden der Klemmbacken (10) der Befesti-gungsklemmen (12) vorgesehene Vorsprünge in bzw. hinter diese greifen und so die Befestigungsklemmen (12) im gelockerten Zustand am Schmutzfänger festhalten sowie eine Verdrehung bezüglich des Schmutzfängerlappens beim Anziehen der Schrauben (15) der Befestigungsklemmen (12) verhindern.

Fig. 1

EP 0 049 864 A1

**UEXKÜLL & STOLBERG**

PATENTANWALTE

BESELERSTRASSE 4
D·2000 HAMBURG 52

EUROPEAN PATENT ATTORNEYS
**0049864**

DR J·D FRHR von UEXKÜLL
DR ULRICH GRAF STOLBERG
DIPL·ING JURGEN SUCHANTKE
DIPL·ING ARNULF HUBER
DR ALLARD von KAMEKE
DR KARL·HEINZ SCHULMEYER

Knut Arenhold
Westend 7

2000 Hamburg 52

Prio: 9. Okt. 1980
P 30 38 113.6
(18047)

Oktober 1981

## Universal-Schmutzfänger für Kraftfahrzeuge

Die Erfindung bezieht sich auf einen Universal-Schmutzfänger für Kraftfahrzeuge mit einem Lappen aus biegsamem Material, der einen Lappenhauptkörper und einen an diesen nach oben anschließenden Anpassungsansatz zur Anpassung des Lappens an den Karosserieverlauf aufweist, wobei die Oberkante des Lappenhauptkörpers in die bogenförmig oder gerade, im allgemeinen von innen nach außen verlaufende Innenkante des Anpassungsansatzes übergeht und zumindest im Bereich der Innenkante des Anpassungsansatzes ein als Verstärkungsstück dienender, ebener, verbiegbarer Blechstreifen vorgesehen ist.

Ein bekannter Schmutzfänger dieser Art (DE-OS 28 51 748) wird üblicherweise mit Hilfe von ein oder mehreren getrennten Befestigungsklemmen an dem im Bereich des Radausschnittes befindlichen Karosseriefalz eines Kraftfahrzeuges, an diesem Karosseriefalz anliegend befestigt. Bei diesem bekannten Schmutzfänger können die Befestigungsklemmen jedoch auf der ebenen Blechstreifenoberfläche leicht abrutschen und sich beim Festziehen der Befestigungsschraube im Drehsinn der Schraube verdrehen, wodurch der Schmutzfänger parallel zur Kraftfahrzeug-Radachse nach außen geschwenkt wird. Um dieses Verlagern des Schmutzfängers zu vermeiden, muß der Schmutzfänger während des Festziehens der Befestigungsschraube dauernd von Hand ausgerichtet werden, was insbesondere bei einem nicht aufgebockten Kraftfahrzeug beträchtliche Schwierigkeiten bereitet. Außerdem halten die Befestigungsklemmen nur bei angezogener Schraube am Blechstreifen, lösen sich jedoch in dem für die Montage gelockerten Zustand leicht von dem zu montierenden Schmutzfänger.

Es ist auch bereits ein Schmutzfänger mit in den Kautschuk-Anpassungsansatz eingebettetem Blechstreifen bekannt, bei dem ein Teil der üblicherweise zweiteiligen Befestigungsklemmen an den Blechstreifen angeformt ist. Dadurch ist zwar während der Montage kein Verrutschen der Befestigungsklemmen zu befürchten, doch ist die Lage der Befestigungsklemme nicht frei wählbar, sondern durch die Lage des mit dem Blechstreifen verbundenen Klemmenteils vorgegeben. Um daher die Wahl zwischen mehreren Befestigungspunkten zu haben, weist der bekannte Schmutzfänger drei angeformte Klemmenteile auf, von denen üblicherweise nur zwei bei der Montage benutzt werden. Ein wesentlicher Nachteil dieses bekannten Schmutzfängers liegt in der verhältnismäßig komplizierten und daher aufwendigen Form des Blechstreifens sowie darin, daß die Befestigungspunkte nicht frei wählbar sind.

Es ist Aufgabe der Erfindung, einen auf einfache Weise mittels Befestigungsklemmen an unterschiedlichen Kraftfahrzeugen befestigbaren Schmutzfänger zu schaffen, bei dem die locker vormontierten, den Blechstreifen und den Schmutzfängerlappen an beliebiger Stelle umfassenden Befestigungsklemmen am Schmutzfänger gehalten und darüber hinaus gegen Verdrehen gesichert sind.

Zur Lösung dieser Aufgabe wird ein Schmutzfänger der eingangs erwähnten Art erfindungsgemäß derart ausgestaltet, daß der Blechstreifen mindestens eine im wesentlichen parallel zur Innenkante des Anpassungsansatzes verlaufende Vertiefung und/oder Rippe aufweist, die zur Aufnahme von Vorsprüngen von Befestigungsklemmen dient bzw. von derartigen Vorsprüngen hintergriffen wird.

- 4 -

0049864

Die Vertiefung kann aus einer in den Blechstreifen eingeformten Nut oder einem Schlitz bestehen. Sie kann mehrere getrennte Abschnitte aufweisen.

Die Vertiefung kann auch zwischen zwei parallel zueinander verlaufenden Erhöhungen oder Rippen auf der Oberseite des Blechstreifens gebildet werden.

Ist auf dem Blechstreifen nur eine einzige entsprechend geformte Rippe vorhanden, so wird diese bei montierten Befestigungsklemmen von deren Vorsprüngen hintergriffen.

Die Erfindung wird im folgenden anhand der Figuren näher erläutert.

Figur 1 zeigt in einer Teilansicht den oberen Teil eines Schmutzfängerlappens mit Befestigungsklemmen und einem ebenen Blechstreifen gemäß der Erfindung.

Figuren 2a bis 2c zeigen unterschiedlich geformte Blechstreifen im Schnitt entlang der Linie II-II aus Figur 1.

Figur 3 zeigt einen anderen Blechstreifen im Schnitt entlang der Linie II-II aus Figur 1.

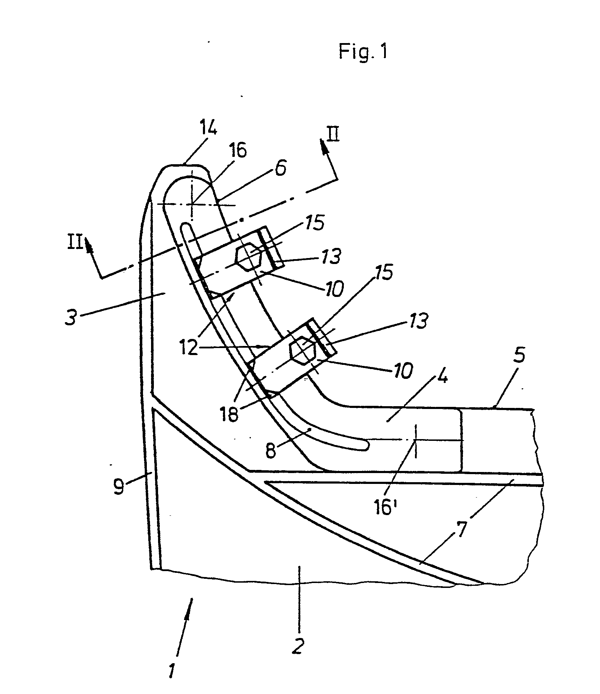

Der teilweise in Figur 1 gezeigte Schmutzfängerlappen 1 hat einen Lappenhauptkörper 2 mit Rippen 7 und 9, und an den Lappenhauptkörper 2 schließt nach oben ein Anpassungsansatz 3 an. Der Anpassungsansatz 3 ist im wesentlichen dreiecksförmig mit einer gekrümmten Innenkante 6, die in eine Oberkante 5 des Lappenhauptkörpers übergeht. Der Abstand der Innenkante 6 vom Außenrand des Schmutzfängers 1 bzw. der Rippe 7 ist im Bereich der Spitze 14 des Anpassungsansatzes 3 geringer, als im Bereich der Oberkante 5 des Lappenhauptkörpers 2.

Entlang der Innenkante 6 des Anpassungsansatzes 3 erstreckt sich an einer Seite des Schmutzfängerlappens 1 ein ebener, verbiegbarer Blechstreifen 4, der sich entsprechend dem Verlauf der Oberkante 5 des Lappenhauptkörpers 2 in den Lappenhauptkörper fortsetzt. An der Stelle 16 ist das obere Ende des Blechstreifens 4 im Bereich der Spitze 14 des Anpassungsansatzes 13 am Anpassungsansatz 3 befestigt, während an der Stelle 16' die Befestigung im Bereich des Lappenhauptkörpers 2 vorgesehen ist. Die Befestigung erfolgt vorzugsweise mittels Nieten.

Der in dem bevorzugten Ausführungsbeispiel dem Verlauf der Innenkante 6 des Anpassungsansatzes 3 folgende und parallele Ränder aufweisende Blechstreifen 4 hat an seiner Außenseite eine Vertiefung 8, die im Abstand zur Innenkante 6 des Anpassungsansatzes 3 und parallel zu dieser verläuft. Die Vertiefung 8 setzt sich bis in den im Lappenhauptkörper liegenden Teil 2 des Blechstreifens 4 fort.

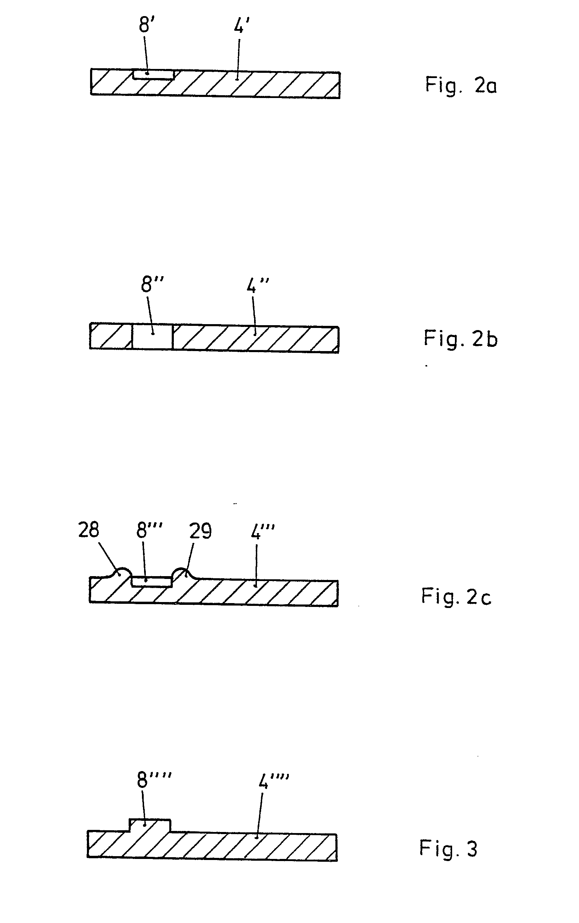

Gemäß dem in Figur 2a gezeigten Ausführungsbeispiel ist die Vertiefung eine Nut 8', die durch spanabhebende Verformung im Blechstreifen 4' hergestellt ist, während die Vertiefung im Ausführungsbeispiel gemäß Figur 2b aus einem Schlitz 8" im Blechstreifen 4" besteht.

Wie das Ausführungsbeispiel gemäß Figur 2c zeigt, kann auch eine Vertiefung 8''' zwischen zwei erhöhten Bereichen 28,29 des Blechstreifens 4''' gebildet werden.

In Figur 2 sind zwei Befestigungsklemmen 12 gezeigt, wie sie beispielsweise aus der DE-OS 28 51 748 bekannt sind. Jede Befestigungsklemme 12 besteht aus zwei Klemmbacken 10 und 13, die durch eine Schraube 15 gegeneinander gezogen werden. Die außerhalb des Schmutzfängers liegenden Enden der Klemmbacken 10 und 13 sind abgewinkelt und gegeneinander gerichtet, so daß sie aneinanderliegen und eine Verdrehung der Klemmbacken bei Drehung der Schraube 15 verhindern.

Die im Bereich des Schmutzfängerlappens befindlichen Enden der Klemmbacken 10 weisen Vorsprünge 18 in Form von abgekanteten Ecken, aufgesetzten Warzen oder winkelartigen Fortsätzen auf, die in die Vertiefung 8 eingreifen und bereits beim lockeren Festziehen der Schraube 15 ein Verdrehen der Befestigungsklemmen 12 gegenüber dem Blechstreifen 4 und damit gegenüber dem Schmutzfängerlappen 1 verhindern. Ferner halten sie die locker festgeschraubten Befestigungsklemmen 12 ausreichend am Anpassungsansatz 3 fest, um ein Abfallen vor oder während der Montage zu verhindern.

Es ist klar, daß der Abstand der Vertiefung 8 von der Innenkante 6 des Anpassungsansatzes 3 jeweils in Abhängigkeit von der Länge der klemmenden Enden der Befestigungsklemmen 12 zu wählen ist. Bei nahe der Innenkante 6 verlaufender Vertiefung 8 werden daher Befestigungsklemmen 12 mit kurzen Schenkeln gewählt, während andernfalls Befestigungsklemmen mit längeren Schenkeln benutzt werden.

In einem anderen Ausführungsbeispiel kann der Blechstreifen 4'''' (Figur 3) eine Rippe 8'''' aufweisen, die im wesentlichen den gleichen Verlauf wie die Vertiefung 8 gemäß Figur 1 hat. In diesem Fall greifen die abgewinkelten Ecken, die aufgesetzten Warzen oder winkelartigen Fortsätze der Schenkel der Befestigungsklemmen hinter die Rippe 8'''', so daß die gleiche Wirkung erzielt wird, wie in Zusammenhang mit der Vertiefung 8 beschrieben.

Patentansprüche

1. Universal-Schmutzfänger für Kraftfahrzeuge mit einem Lappen aus biegsamem Material, der einen Lappenhauptkörper (2) und einen an diesen nach oben anschließenden Anpassungsansatz (3) zur Anpassung des Lappens an den Karosserieverlauf aufweist, wobei die Oberkante (5) des Lappenhauptkörpers (2) in die bogenförmig oder gerade, im allgemeinen von innen nach außen verlaufende Innenkante (6) des Anpassungsansatzes (3) übergeht und zumindest im Bereich der Innenkante (6) des Anpassungsansatzes (3) ein als Verstärkungsstück dienender, ebener, verbiegbarer Blechstreifen (4) vorgesehen ist, dadurch gekennzeichnet, daß der Blechstreifen (4) mindestens eine im wesentlichen parallel zur Innenkante (6) des Anpassungsansatzes (3) verlaufende Vertiefung (8) und/oder Rippe (8'''') aufweist, die zur Aufnahme von Vorsprüngen (18) von Befestigungsklemmen (12) bzw. zum Hintergreifen durch die Vorsprünge der Befestigungsklemmen dient.

2. Universal-Schmutzfänger nach Anspruch 1, dadurch gekennzeichnet, daß sich die Vertiefung (8) oder Rippe über einen wesentlichen Teil der Länge des Blechstreifens (4), insbesondere im Bereich des Anpassungsansatzes (3) erstreckt.

3.  Universal-Schmutzfänger nach Anspruch 1 oder 2, dadurch gekennzeichnet, daß die Vertiefung aus einer in den Blechstreifen (4') eingeformten Nut (8') besteht.

4.  Universal-Schmutzfänger nach Anspruch 1 oder 2, dadurch gekennzeichnet, daß die Vertiefung ein im Blechstreifen (4") vorgesehener Schlitz (8") ist.

5.  Universal-Schutzfänger nach einem der Ansprüche 1 bis 4, dadurch gekennzeichnet, daß die Vertiefung aus mehreren getrennten Abschnitten besteht.

6.  Universal-Schmutzfänger nach einem der Ansprüche 1 bis 5, dadurch gekennzeichnet, daß die Vertiefung (8''') zwischen Erhöhungen (28,29) gebildet ist.

1/2

Fig. 1

8'  4'

Fig. 2a

8"  4"

Fig. 2b

28  8'''  29  4'''

Fig. 2c

8''''  4''''

Fig. 3

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - B2 - 2 352 472 (ARENHOLD) <br> * Fig. 1 bis 3 * | 1 |
| | DE - U1 - 8 004 418 (JOHN) <br> * Seiten 1, 2; Fig. 1 * | 1,6 |
| D | DE - A1 - 2 851 748 (ARENHOLD) <br> * Seite 23, Zeilen 9 bis 16; <br>    Fig.  9 * | 1,4 |
| A | DE - U - 1 884 558 (SCHÄFERBARTHOLD) <br> * Anspruch 3 * | |

**KLASSIFIKATION DER ANMELDUNG (Int. Cl.³)**

B 62 D   25/18

**RECHERCHIERTE SACHGEBIETE (Int. Cl.³)**

B 62 D   25/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 11-12-1981 | LUDWIG |

EPA form 1503.1  06.78